# FASCICULE DE BREVET EUROPEEN

(11) **EP 4 007 842 B1**
(45) Date de publication et mention de la délivrance du brevet: **25.10.2023**
(21) Numéro de dépôt: 20756919.5
(22) Date de dépôt: 24.07.2020
(51) Int. Cl.: F01D 5/18

(54) **AUBE MUNIE D'UN CIRCUIT DE REFROIDISSEMENT**
MIT KÜHLKREISLAUF VERSEHENE SCHAUFEL
BLADE PROVIDED WITH A COOLING CIRCUIT

(30) Priorité: 01.08.2019 FR 1908825
(43) Date de publication de la demande: 08.06.2022
(73) Titulaire: SAFRAN AIRCRAFT ENGINES, 75015 Paris (FR)
(72) Inventeur: SLUSARZ, Michel, 77550 MOISSY-CRAMAYEL (FR); ENEAU, Patrice, 77550 MOISSY-CRAMAYEL (FR); DUJOL, Charlotte, Marie, 77550 MOISSY-CRAMAYEL (FR)
(74) Mandataire: Cabinet Beau de Loménie
(86) Numéro de dépôt international: PCT/FR2020/051367
(87) Numéro de publication internationale: WO 2021/019170

(56) Documents cités:
- EP-A1- 2 193 859
- US-A1- 2014 093 386
- US-B1- 7 527 475
- US-B1- 7 901 181

## Description

### Domaine Technique

Le présent exposé concerne une aube pour turbomachine munie d'un circuit de refroidissement. Il concerne également une roue aubagée, une turbine et une turbomachine comprenant une telle aube.

Une telle aube peut être utilisée au sein de n'importe quel module de turbomachine, en tant qu'aube fixe ou mobile ; toutefois, elle est tout particulièrement adaptée pour les environnements à haute température, et donc notamment pour les turbines haute pression. Elle peut être utilisée dans tout type de turbomachine, et notamment dans des turboréacteurs d'avions.

### Technique antérieure

Les aubes de turbines haute pression sont des pièces soumises à des températures de fonctionnement élevées, supérieures aux limites admissibles de résistance de leurs matériaux et même bien souvent supérieures à la température de fusion de ces matériaux.

En conséquence, afin de résister à de telles températures, ces aubes sont généralement munies d'un circuit de refroidissement interne dans lequel circule de l'air plus frais prélevé à un autre endroit de la turbomachine. Du bon fonctionnement de ce circuit de refroidissement découle trois enjeux antithétiques : la température de veine, que l'on souhaite maximiser pour augmenter le rendement de la turbine ; le débit de refroidissement, que l'on souhaite minimiser pour réduire les pertes de la turbomachine ; et la durée de vie des aubes, que l'on souhaite maximiser pour limiter le recours à la maintenance.

Dès lors, la conception de ce circuit de refroidissement, et notamment sa géométrie, est critique. En conséquence, tout progrès obtenu sur cette dernière permet d'obtenir des gains sur l'un ou plusieurs des enjeux ci-dessus sans concéder de recul sur les autres.

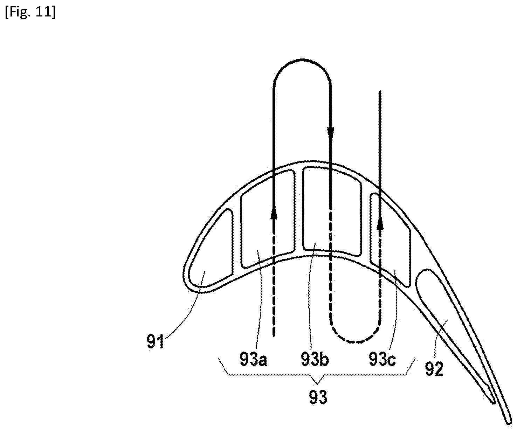

A ce jour, une configuration classique de circuit de refroidissement est représentée sur la Figure 11 : elle comprend une cavité ascendante 91 le long du bord d'attaque, une cavité ascendante 92 le long du bord de fuite, et une cavité appelée « trombone » 93 entre les deux, cette cavité 93 comprenant successivement une portion ascendante 93a, une portion descendante 93b puis à nouveau une portion ascendante 93c. Une telle configuration classique a fait ses preuves par le passé mais atteint aujourd'hui ses limites : elle ne permet plus en effet de suivre l'augmentation des températures prévue dans les derniers modèles de turbomachines en cours de conception. Le document US 7901181 présente un exemple de circuit de refroidissement comprenant un tel « trombone ».

On connait également le document WO 2015/162389 qui décrit une variante de ce circuit de refroidissement classique permettant de mieux tirer parti de la force de Coriolis au sein du circuit de refroidissement. Toutefois, des progrès encore plus importants sont souhaités.

Il existe donc un réel besoin pour une aube pour turbomachine munie d'un circuit de refroidissement encore plus efficace que les configurations connues précitées.

### Exposé de l'invention

Le présent exposé concerne une aube pour turbomachine s'étendant longitudinalement entre un pied et un sommet, comprenant une paroi intrados, une paroi extrados, un bord d'attaque et un bord de fuite et comprenant une pluralité de cavités de ventilation, internes, formant un circuit de refroidissement de l'aube, dans laquelle au moins une cavité de ventilation est une cavité de ventilation d'un premier type comprenant au moins une portion ascendante, s'étendant longitudinalement entre le pied et le sommet, en contact avec la paroi intrados et à distance de la paroi extrados, et au moins une portion d'évacuation, s'étendant vers et débouchant au niveau du bord de fuite par au moins un orifice de bord de fuite.

Dans le présent exposé, les termes « longitudinal », « transversal », « inférieur », « supérieur » et leurs dérivés sont définis par rapport à la direction principale des aubes, le côté « inférieur » étant du côté du pied de l'aube tandis que le côté « supérieur » est du côté du sommet de l'aube ; les termes « axial », « radial », « tangentiel », « intérieur », « extérieur » et leurs dérivés sont quant à eux définis par rapport à l'axe principal de la turbomachine ; on entend par « plan axial » un plan passant par l'axe principal de la turbomachine et par « plan radial » un plan perpendiculaire à cet axe principal ; enfin, les termes « amont » et « aval » sont définis par rapport à la circulation de l'air dans le circuit de refroidissement.

Plus particulièrement, par « longitudinalement » on entend que la direction d'ensemble de cette portion de cavité forme un angle inférieur à 20° par rapport à la direction longitudinale. De même, par « transversalement » on entend que la direction d'ensemble de cette portion de cavité forme un angle inférieur à 20° par rapport au plan transversal, donc un angle supérieur à 70° par rapport à la direction longitudinale. On notera à cette occasion que la direction longitudinale de l'aube correspond à une direction radiale de la turbomachine.

Ainsi, dans un tel circuit de refroidissement, le bord de fuite n'est pas refroidi par une unique cavité de ventilation, comme cela est le cas dans la configuration classique. Dès lors, contrairement au cas classique où une part importante du débit de refroidissement de la cavité de bord de fuite se perd avant d'atteindre le sommet de la cavité en raison des orifices de bord de fuite présent tout le long du bord de fuite, il est possible d'apporter un débit de refroidissement significatif, sans perte importante, à tous les niveaux souhaités du bord de fuite, et y compris en sommet de bord de fuite, améliorant donc le refroidissement de cette zone critique.

En particulier, en prévoyant plusieurs cavités de ventilation de ce premier type, il est possible de refroidir de manière efficace et dédiée plusieurs zones spécifiques du bord de fuite.

Par ailleurs, grâce à cette portion ascendante prévue du côté intrados, il est possible de tirer au mieux profit de la force de Coriolis qui vient ainsi plaquer l'air de refroidissement contre la paroi intrados lorsque l'air de refroidissement monte dans la portion ascendante alors que la roue portant l'aube tourne. Ainsi, un échange plus important avec la paroi intrados, fortement échauffée, est possible.

Dès lors, à débit de refroidissement donné, cette aube est capable de résister à des températures plus élevées sans voir sa durée de vie réduite. En conséquence, dans le cas d'une turbine haute-pression, une telle aube permettra d'augmenter la température de fonctionnement de la turbine et donc d'obtenir un rendement plus élevé.

Dans certains modes de réalisation, l'aube comprend au moins trois, de préférence au moins cinq, cavités de ventilation du premier type. En conséquence, il est possible de refroidir indépendamment, avec des débits de refroidissement dédiés, plusieurs zones distinctes du bord de fuite de l'aube. On contrôle ainsi plus finement le débit de refroidissement passant par chaque orifice de bord de fuite, ce qui améliore le refroidissement global. En particulier, cela réduit le gradient de température habituellement présent le long du bord de fuite. De même, ces différentes cavités de ventilation du premier type permettent également de refroidir indépendamment plusieurs zones distinctes de la paroi intrados, limitant l'apparition d'un gradient le long de la paroi intrados entre le bord d'attaque et le bord de fuite.

Dans certains modes de réalisation, au moins une cavité de ventilation du premier type comprend en outre au moins une portion descendante, s'étendant longitudinalement, en contact avec la paroi extrados et à distance de la paroi intrados. Une telle portion descendante permet de refroidir la paroi extrados de l'aube. Ici encore, cette configuration permet de tirer au mieux profit de la force de Coriolis qui vient ainsi plaquer l'air de refroidissement contre la paroi extrados lorsque l'air de refroidissement descend dans la portion descendante alors que la roue portant l'aube tourne. Ainsi, un échange plus important avec la paroi extrados est possible.

Dans certains modes de réalisation, toutes les cavités de ventilation du premier type comprennent une telle portion descendante, à l'exception d'une seule dont la portion d'évacuation est la plus proche du sommet de l'aube. En particulier, pour des raisons de compacité, cette dernière cavité est de préférence celle dont la portion ascendante est la plus proche du bord de fuite.

Dans certains modes de réalisation, ladite portion descendante s'étend à la suite de ladite portion ascendante. Ainsi, on favorise le refroidissement de la paroi intrados, généralement plus critique thermiquement et mécaniquement, par rapport à la paroi extrados, l'air de refroidissement circulant en effet d'abord le long de la paroi intrados avant de circuler le long de la paroi extrados.

Dans certains modes de réalisation, ladite portion d'évacuation s'étend depuis l'extrémité inférieure de ladite portion descendante.

Dans certains modes de réalisation, ladite portion ascendante et ladite portion descendante sont séparées par une cloison. Une telle cloison interne forme ainsi une âme centrale plus froide, prévue à distance des parois externes de l'aube et protégée de part et d'autre par l'air de refroidissement, ce qui contribue à renforcer la tenue mécanique de l'aube. Cette cloison s'étend de préférence selon une surface médiane de l'aube, autrement dit de manière sensiblement parallèle aux parois intrados et extrados, c'est-à-dire sensiblement parallèle au plan axial dans le référentiel de la turbomachine.

Dans certains modes de réalisation, la portion ascendante et/ou la portion descendante est à distance du bord de fuite. Le bord de fuite n'est donc pas refroidi par cette portion ascendante et/ou descendante.

Dans certains modes de réalisation, la portion ascendante et/ou la portion descendante est à distance du bord d'attaque. Le bord d'attaque n'est donc pas refroidi par cette portion ascendante et/ou descendante.

Dans certains modes de réalisation, au moins une, et de préférence chaque, cavité de ventilation du premier type est continue et dépourvue d'embranchement. On évite ainsi de diviser le débit de refroidissement. A noter que cela n'exclut pas la possible présence d'orifices de ventilation débouchant à travers la paroi intrados et/ou la paroi extrados.

Dans certains modes de réalisation, au moins une, et de préférence chaque, cavité de ventilation du premier type s'étend depuis le pied de l'aube et se termine au niveau du bord de fuite. L'alimentation en air de refroidissement peut ainsi se faire à partir du pied de l'aube.

Dans certains modes de réalisation, au moins une, et de préférence chaque, cavité de ventilation du premier type comprend une unique portion ascendante. On évite ainsi que l'air de refroidissement ne se réchauffe de manière trop importante avant d'atteindre le tronçon d'évacuation et le bord de fuite.

Dans certains modes de réalisation, au moins une cavité de ventilation du premier type comprend une unique portion descendante. De préférence, cela est le cas de toutes les cavités de ventilation du premier type possédant une telle portion descendante. On évite ainsi que l'air de refroidissement ne se réchauffe de manière trop importante avant d'atteindre le tronçon d'évacuation et le bord de fuite.

Dans certains modes de réalisation, le circuit de refroidissement comprend entre 10 et 20 orifices de bord de fuite. Le nombre d'orifices de bord de fuite est choisi en fonction de la taille de l'aube et du besoin en refroidissement.

Dans certains modes de réalisation, chaque cavité de ventilation du premier type comprend entre 2 et 5 orifices de bord de fuite. Ceci permet une répartition relativement fine du débit de refroidissement entre les orifices de bord de fuite de l'ensemble de l'aube, et donc un refroidissement sensiblement homogène tout le long du bord de fuite.

Dans certains modes de réalisation, au moins un, et de préférence chaque, orifice de bord de fuite est une fente s'étendant dans la direction du bord de fuite.

Dans certains modes de réalisation, la paroi d'au moins une, et de préférence chaque, cavité de ventilation du premier type comporte un congé ou une surface inclinée à la frontière entre sa portion d'évacuation et sa portion sensiblement longitudinale immédiatement amont. Un tel congé ou une telle surface inclinée permet d'accompagner le flux d'air de refroidissement à la frontière entre la portion longitudinale et la portion d'évacuation : on accompagne ainsi le changement de direction du flux et l'évolution de la surface de passage, ce qui permet de réduire les pertes de charge au niveau de cette transition.

Dans certains modes de réalisation, ladite surface inclinée forme un angle compris entre 30 et 60° avec la direction longitudinale.

Dans certains modes de réalisation, au moins une, et de préférence chaque, cavité de ventilation du premier type est pourvue d'au moins un déflecteur à la frontière entre sa portion d'évacuation et sa portion sensiblement longitudinale immédiatement amont. Ce déflecteur permet d'accompagner le changement de direction du flux à la frontière entre la portion longitudinale et la portion d'évacuation : on réduit ainsi les pertes de charge au niveau de cette transition. Un tel déflecteur peut notamment prendre la forme d'une ailette ou d'un haricot.

Dans certains modes de réalisation, la portion d'évacuation d'au moins une, et de préférence chaque, cavité de ventilation du premier est dépourvue d'arête saillante. On réduit ainsi l'effet de goulot d'étranglement qui risquerait d'entraîner des pertes de charge dans la circulation de l'air de refroidissement. Pour cela, on cherche à introduire un changement de pente progressif de la cloison séparant ladite portion d'évacuation de la portion ascendante de la cavité de ventilation voisine : cette cloison est donc de préférence courbe, sans rupture de pente, jusqu'à son intersection avec la paroi intrados.

Dans certains modes de réalisation, la portion d'évacuation d'au moins une cavité de ventilation du premier type possède, en coupe dans un plan perpendiculaire à la direction longitudinale de l'aube, un profil de forme générale courbée dépourvue d'arrête.

Dans certains modes de réalisation, le circuit de refroidissement comprend une première cavité de ventilation d'un deuxième type, ne débouchant pas au bord de fuite, le long du bord d'attaque. Le bord d'attaque bénéficie ainsi d'un refroidissement dédié, indépendant du refroidissement du bord de fuite.

Toutefois, dans d'autres modes de réalisation, l'une de cavité de ventilation du premier type pourrait s'étendre le long du bord d'attaque.

Dans certains modes de réalisation, le circuit de refroidissement comprend une deuxième cavité de ventilation du deuxième type le long de la première cavité de ventilation du deuxième type.

Dans certains modes de réalisation, au moins une, et de préférence chaque, cavité de ventilation du deuxième type s'étend sensiblement longitudinalement, en contact à la fois avec la paroi intrados et avec la paroi extrados.

Dans certains modes de réalisation, au moins une, et de préférence chaque, cavité de ventilation du deuxième type est continue, dépourvue d'embranchement et dépourvue de coude.

Dans certains modes de réalisation, au moins une cavité de ventilation est munie d'orifices de ventilation débouchant à travers la paroi intrados et/ou la paroi extrados. De tel orifices de ventilation, distincts des orifices de bord de fuite, peuvent être prévus aussi bien pour les cavités de ventilation du premier type que pour les cavités de ventilation du deuxième type.

Dans certains modes de réalisation, au moins une cavité de ventilation est munie de promoteurs de turbulences. De tels promoteurs de turbulence permettent d'augmenter la turbulence de l'air de refroidissement et donc d'augmenter l'efficacité de refroidissement. Il peut notamment s'agir de perturbateurs, tels des demi-sphères ou des protubérances rectilignes prévus sur la paroi à refroidir, des picots ou des pontets reliant deux parois ou une paroi avec une cloison de la cavité. De tels promoteurs de turbulence peuvent être prévus aussi bien dans les cavités de ventilation du premier type que dans les cavités de ventilation du deuxième type.

Dans certains modes de réalisation, l'aube est configurée pour prendre place dans une roue mobile de turbine, de préférence haute-pression.

Le présent exposé concerne également une roue aubagée pour module de turbomachine, comprenant au moins une aube selon l'un quelconque des modes de réalisation précédents.

Le présent exposé concerne également une turbine, comprenant au moins une roue aubagée selon l'un quelconque des modes de réalisation précédents.

Plus généralement, le présent exposé concerne également un module de turbomachine comprenant au moins une roue aubagée selon l'un quelconque des modes de réalisation précédents.

Enfin, le présent exposé concerne également une turbomachine, comprenant au moins une roue aubagée selon l'un quelconque des modes de réalisation précédents.

Les caractéristiques et avantages précités, ainsi que d'autres, apparaîtront à la lecture de la description détaillée qui suit, d'exemples de réalisation de l'aube proposée. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
[Fig. 1] La figure 1 est un schéma en coupe axiale d'une turbomachine selon l'exposé.
[Fig. 2] La figure 2 est une vue en perspective d'une aube selon l'exposé.
[Fig. 3] La figure 3 est un schéma illustrant la circulation de l'air de refroidissement dans l'aube de la figure 2.
[Fig. 4A-4C] Les figures 4A, 4B et 4C illustrent l'effet Coriolis dans trois plans différents de l'aube de la figure 2.
[Fig. 5] La figure 5 est une vue du côté intrados d'un premier exemple de noyau.
[Fig. 6] La figure 6 est une vue du côté extrados du premier exemple de noyau.
[Fig. 7] La figure 7 illustre un noyau selon une première variante de réalisation.
[Fig. 8] La figure 8 illustre un circuit de refroidissement selon une deuxième variante de réalisation.
[Fig. 9] La figure 9 est une vue du côté intrados d'un deuxième exemple de noyau.
[Fig. 10] La figure 10 est une vue du côté extrados du deuxième exemple de noyau.
[Fig. 11] La figure 11 est une vue illustrant un circuit de refroidissement de l'état de la technique.

### Description des modes de réalisation

Afin de rendre plus concret l'exposé, des exemples d'aubes sont décrits en détail ci-après, en référence aux dessins annexés. Il est rappelé que l'invention ne se limite pas à ces exemples.

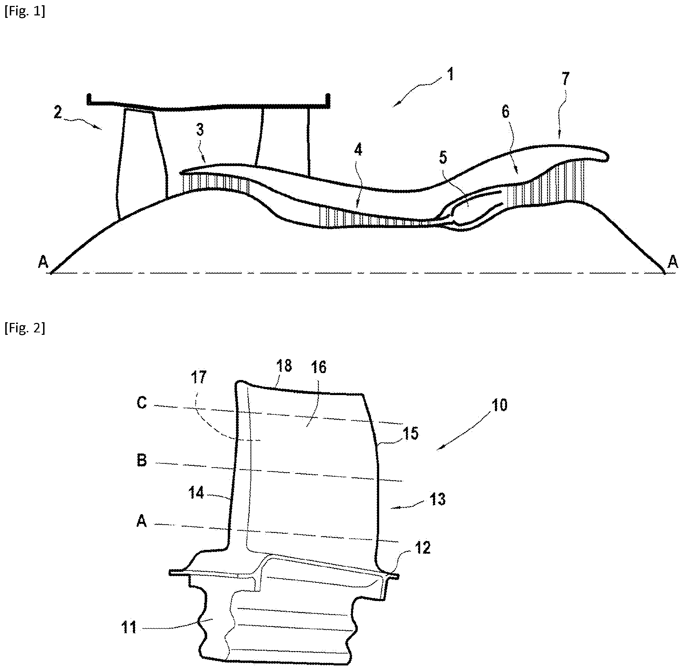

La figure 1 représente, en coupe selon un plan vertical passant par son axe principal A, un turboréacteur à double flux 1 selon l'exposé. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

La figure 2 illustre une aube mobile 10 de la turbine haute pression 6. Elle comprend un pied 11 en forme de sapin, une plateforme 12 et une pale 13. Cette pale 13 comprend un bord d'attaque 14, un bord de fuite 15, une paroi intrados 16, une paroi extrados 17 et une tête d'aube 18.

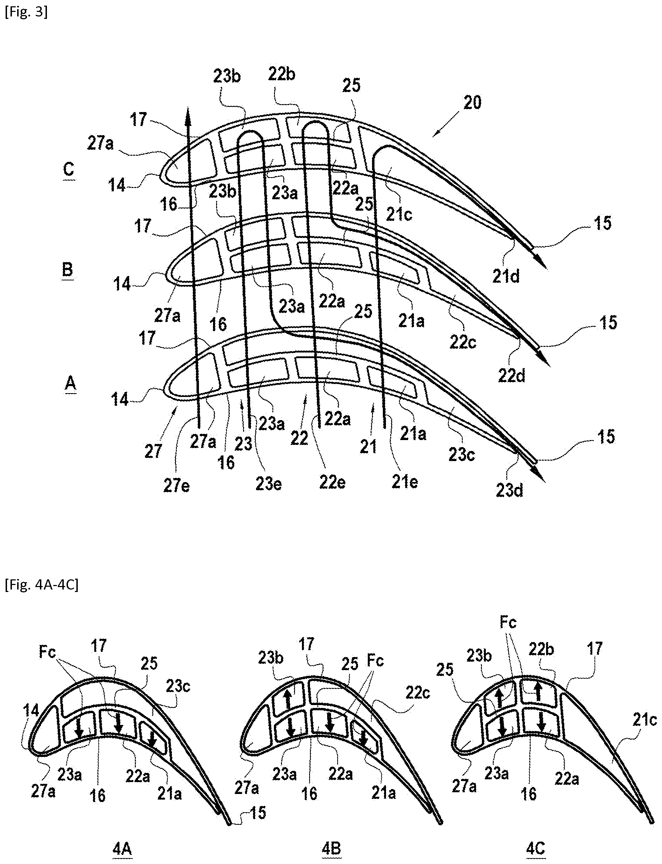

L'aube 10 comprend en outre un circuit de refroidissement 20 représenté sur les figures 3 et 4. Plus précisément, la figure 3 superpose trois vues en coupe de l'aube 10, selon les plans transversaux A, B et C de la figure 2, et représente les circulations de l'air de refroidissement entre ces trois plans. La figure 3A, 3B et 3C se placent dans les plans de coupe A, B et C de la figure 2, respectivement.

Dans cet exemple, le circuit de refroidissement 20 de l'aube 10 comprend trois cavités de ventilation d'un premier type 21, 22, 23 et une cavité de ventilation d'un deuxième type 27.

La première cavité de ventilation du premier type 21 comprend une portion ascendante 21a s'étendant longitudinalement depuis le pied d'aube 11 sur environ deux tiers de la hauteur de la pale 13 puis se prolonge par une portion d'évacuation 21c s'étendant transversalement depuis l'extrémité supérieure de la portion ascendante 21a vers le bord de fuite 15 avant de déboucher au niveau du bord de fuite 15 par au moins un orifice de bord de fuite 21d. La portion ascendante 21a est en contact avec la paroi intrados 16 et à distance de la paroi extrados 17. La portion d'évacuation 21c est en contact à la fois avec la paroi intrados 16 et avec la paroi extrados 17 ; elle s'étend le long du tiers supérieur du bord de fuite 15.

Un premier débit d'air de refroidissement 21e circule dans cette première cavité de ventilation du premier type 21 : ce débit d'air de refroidissement 21e est fourni depuis le disque portant l'aube 10 par l'intermédiaire du pied 11 et circule le long du tronçon ascendant 21a, puis le long du tronçon d'évacuation 21c, puis s'échappe enfin via les orifices de bord de fuite 21d.

La deuxième cavité de ventilation du premier type 22 comprend une portion ascendante 22a s'étendant longitudinalement depuis le pied d'aube 11 sur toute la hauteur de la pale 13 puis se prolonge par une portion descendante 22b s'étendant longitudinalement depuis l'extrémité supérieure de la portion ascendante 22a sur environ un tiers de la hauteur de la pale 13 puis se prolonge par une portion d'évacuation 22c s'étendant transversalement vers le bord de fuite 15 avant de déboucher au niveau du bord de fuite 15 par au moins un orifice de bord de fuite 22d. La portion ascendante 22a est en contact avec la paroi intrados 16 et à distance de la paroi extrados 17. La portion descendante 22b est prévue entre la portion ascendante 22a et la paroi extrados 17 : elle est donc en contact avec la paroi extrados 17 et à distance de la paroi intrados 16. La portion d'évacuation 22c est d'abord uniquement en contact avec la paroi extrados 17 dans un tronçon amont longeant les portions ascendantes 21a, 22a des deux premières cavités du premier type 21, 22, puis en contact à la fois avec la paroi intrados 16 et avec la paroi extrados 17 dans un tronçon aval ; elle s'étend le long du tiers médian du bord de fuite 15.

Un deuxième débit d'air de refroidissement 22e circule dans cette deuxième cavité de ventilation du premier type 22 : ce débit d'air de refroidissement 22e est fourni depuis le disque portant l'aube 10 par l'intermédiaire du pied 11 et circule le long du tronçon ascendant 22a, puis le long du tronçon descendant 22b, puis le long du tronçon d'évacuation 22c, puis s'échappe enfin via les orifices de bord de fuite 22d.

La troisième cavité de ventilation du premier type 23 comprend une portion ascendante 23a s'étendant longitudinalement depuis le pied d'aube 11 sur toute la hauteur de la pale 13 puis se prolonge par une portion descendante 23b s'étendant longitudinalement depuis l'extrémité supérieure de la portion ascendante 23a sur environ deux tiers de la hauteur de la pale 13 puis se prolonge par une portion d'évacuation 23c s'étendant transversalement vers le bord de fuite 15 avant de déboucher au niveau du bord de fuite 15 par au moins un orifice de bord de fuite 23d. La portion ascendante 23a est en contact avec la paroi intrados 16 et à distance de la paroi extrados 17. La portion descendante 23b est prévue entre la portion ascendante 23a et la paroi extrados 17 : elle est donc en contact avec la paroi extrados 17 et à distance de la paroi intrados 16. La portion d'évacuation 23c est d'abord uniquement en contact avec la paroi extrados 17 dans un tronçon amont longeant les portions ascendantes 21a, 22a, 23a des trois premières cavités du premier type 21, 22, 23, puis en contact à la fois avec la paroi intrados 16 et avec la paroi extrados 17 dans un tronçon aval ; elle s'étend le long du tiers inférieur du bord de fuite 15.

Un troisième débit d'air de refroidissement 23e circule dans cette troisième cavité de ventilation du premier type 23 : ce débit d'air de refroidissement 23e est fourni depuis le disque portant l'aube 10 par l'intermédiaire du pied 11 et circule le long du tronçon ascendant 23a, puis le long du tronçon descendant 23b, puis le long du tronçon d'évacuation 23c, puis s'échappe enfin via les orifices de bord de fuite 23d.

La cavité de ventilation du deuxième type 27 comprend une unique portion ascendante 27a s'étendant longitudinalement depuis le pied d'aube 11 sur toute la hauteur de la pale 13, le long du bord d'attaque 14.

Un quatrième débit d'air de refroidissement 27e circule dans cette cavité de ventilation du deuxième type 27 : ce débit d'air de refroidissement 27e est fourni depuis le disque portant l'aube 10 par l'intermédiaire du pied 11 et circule le long du tronçon ascendant 27a ; il s'échappe via de petits orifices de ventilation (non représentés) prévus tout le long de la cavité 27.

Ainsi, les portions ascendantes 21a, 22a, 23a des cavités du premier type 21, 22, 23 se situent toutes en contact avec la paroi intrados 16. Dès lors, comme cela est visible sur les figures 4A à 4C, la force de Coriolis Fc tend à plaquer l'air de refroidissement circulant radialement vers l'extérieur dans ces portions ascendantes 21a, 22a, 23a contre la paroi intrados 16, ce qui permet un échange plus important avec l'air de refroidissement et donc un refroidissement plus important de la paroi intrados 16.

De même, les portions descendantes 22b et 23b se situent toutes en contact avec la paroi extrados 17. Dès lors, comme cela est visible sur les figures 4A à 4C, la force de Coriolis Fc tend à plaquer l'air de refroidissement circulant radialement vers l'intérieur dans ces portions descendantes 22b, 23b contre la paroi extrados 17, ce qui permet un échange plus important avec l'air de refroidissement et donc un refroidissement plus important de la paroi extrados 17.

De plus, on note sur les figures 3 et 4 la présence d'une cloison interne 25 séparant les tronçons ascendants 21a, 22a, 23a des cavités du premier type 21, 22, 23 d'une part et les tronçons descendants 22b, 23b ou les tronçons d'évacuation 22c, 23c de ces mêmes cavités 21, 22, 23 d'autre part. Cette cloison 25, s'étendant dans la direction bord d'attaque-bord de fuite, de manière sensiblement équidistante aux parois intrados 16 et extrados 17, est ainsi à distance des parois intrados 16 et extrados 17 : sa température en fonctionnement est donc plus faible que les parois externes 16, 17 de l'aube 10.

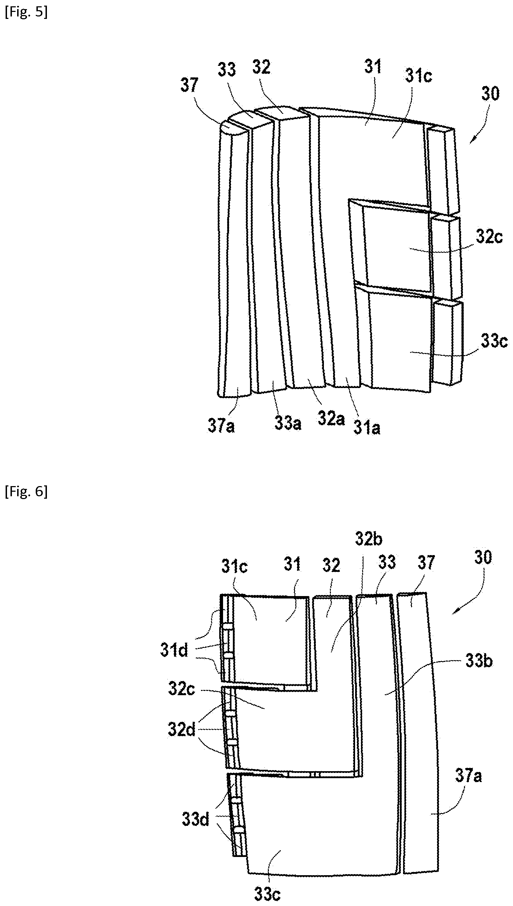

Cette aube 10 est obtenue par fonderie, en particulier selon une méthode à la cire perdue. Le circuit de refroidissement 20 de cette aube 10 peut alors être obtenu grâce au noyau 30 représenté sur les figures 5 et 6, ce dernier étant de préférence produit par fabrication additive. Ce noyau 30 comprend plusieurs éléments de noyau 31, 32, 33 et 37 disposés les uns par rapport aux autres dans la géométrie souhaitée au moment de la fonderie. Chaque élément de noyau 31-37 possède une géométrie correspondant au négatif de la géométrie de l'une des cavités de ventilation 21-27 de l'aube finale 10.

Ainsi, de manière analogue à la première cavité de ventilation du premier type 21, le premier élément de noyau 31 possède une portion ascendante 31a, longitudinale, et une portion d'évacuation 31c, transversale. On note de plus sur la figure 6 que cette portion d'évacuation 31c possède trois segments d'extrémités 31d destinés à former trois orifices de bord de fuite 21d.

De manière analogue à la deuxième cavité de ventilation du premier type 22, le deuxième élément de noyau 32 possède une portion ascendante 32a, longitudinale, une portion descendante 32b, longitudinale, longeant le tronçon supérieur de la portion ascendante 32a, et une portion d'évacuation 32c, transversale. Ici encore, cette portion d'évacuation 32c possède trois segments d'extrémités 32d destinés à former trois orifices de bord de fuite 22d.

De manière analogue à la troisième cavité de ventilation du premier type 23, le troisième élément de noyau 33 possède une portion ascendante 33a, longitudinale, une portion descendante 33b, longitudinale, longeant le tronçon supérieur de la portion ascendante 33a, et une portion d'évacuation 33c, transversale. Ici encore, cette portion d'évacuation 33c possède trois segments d'extrémités 33d destinés à former trois orifices de bord de fuite 23d.

Enfin, pour sa part, de manière analogue à la cavité de ventilation du deuxième type 27, le quatrième élément de noyau 37 possède une unique portion ascendante 37a, longitudinale.

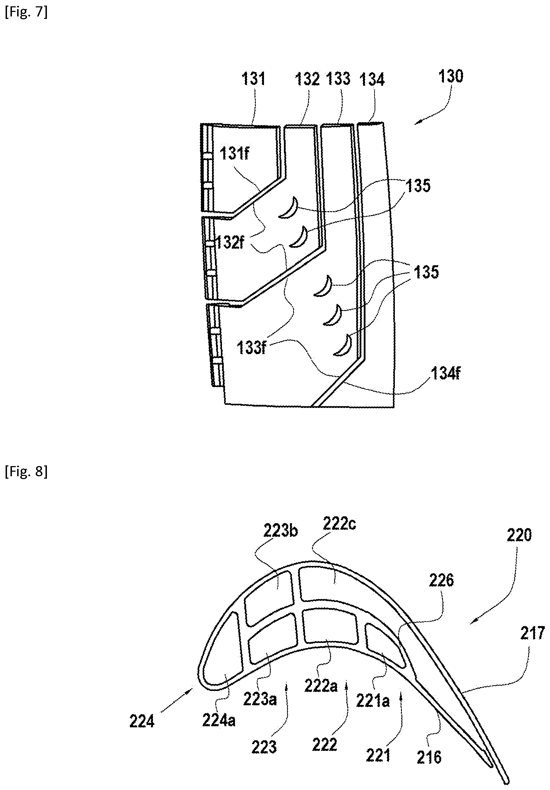

La figure 7 illustre une première variante de réalisation. Dans cette variante, le noyau 130 comprend à nouveau quatre éléments de noyau 131, 132, 133 et 137 ayant la même configuration générale que ceux du premier exemple : ainsi, ce noyau 130 permet d'aboutir à un circuit de refroidissement généralement analogue à celui de la figure 3.

Toutefois, dans cette première variante, la jonction entre les portions transversales (c'est-à-dire les portions d'évacuation 131c, 132c, 133c) des éléments de noyau 131, 132, 133 et leurs portions longitudinales (c'est-à-dire les portions ascendantes 131a ou descendantes 132b, 133b selon le cas) ne se fait plus à angle droit mais par l'intermédiaire de surface inclinées 131f, 132f, 133f, aussi bien à l'intérieur du virage qu'à l'extérieur, le cas échéant. En conséquence, les cavités formées par ces éléments de noyau 131, 132, 133 ainsi modifiés possèdent chacune une section de passage qui s'accroit progressivement à l'entrée de sa portion d'évacuation.

Dès lors, afin de combler l'espace ainsi libéré, et donc continuer de refroidir correctement toute la surface des parois externes de l'aube, le quatrième élément de noyau 137 possède lui-aussi une surface inclinée 137f à son extrémité inférieure, en vis-à-vis de la surface inclinée 133f du troisième élément de noyau 133.

Une deuxième différence présentée par ce noyau 130 dans cette première variante est la présence de lumières 135 en forme de lunule pratiquées dans les deuxième et troisième éléments de noyau 132, 133 au niveau de la transition entre le tronçon descendant 132b, 133b et le tronçon d'évacuation 132c, 133c de l'élément de noyau 132, 133 considéré. Ces lumières 135 aboutissent ainsi à la formation de déflecteurs dans les cavités de ventilation de l'aube finale facilitant la transition de direction en entrée de portion d'évacuation.

La figure 8 présente une deuxième variante de réalisation. Dans cette variante, le circuit de refroidissement 220 est généralement analogue à celui de la figure 3. Toutefois, dans cette variante, la géométrie de la cloison interne 226, séparant chaque portion d'évacuation 222c de la portion ascendante 221a de la première cavité de ventilation du premier type 221, est modifiée afin de réduire le goulot d'étranglement situé à la frontière entre le tronçon amont et le tronçon aval de chaque portion d'évacuation 222c.

En conséquence, dans cette variante, une même cloison interne 226, continue et sans rupture de pente, s'étend depuis l'intersection entre les tronçons ascendant 223a et 223b de la troisième cavité de ventilation du premier type 223 et le tronçon ascendant 227a de la cavité de ventilation du deuxième type 227, jusqu'à la paroi intrados 216.

De plus, dans cette variante, la portion ascendante 221a de la première cavité de ventilation du premier type 221 possède une section triangulaire et non plus quadrangulaire.

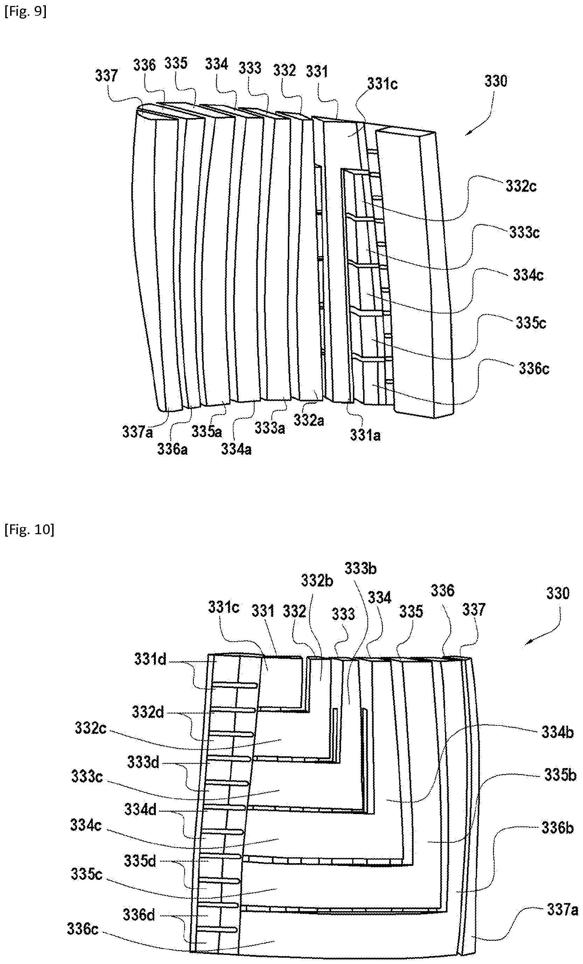

Les figures 9 et 10 représentent un deuxième exemple de noyau 330 permettant d'obtenir un circuit de refroidissement plus complexe composé de six cavités de ventilation du premier type et d'une cavité de ventilation du deuxième type. Ce noyau 330 comprend sept éléments de noyau 331, 332, 333, 334, 335, 336 et 337 disposés les uns par rapport aux autres dans la géométrie souhaitée au moment de la fonderie.

Le premier élément de noyau 331 possède une portion ascendante 331a, longitudinale, et une portion d'évacuation 331c, transversale, possédant deux segments d'extrémités 331d destinés à former deux orifices de bord de fuite.

Les deuxième à sixième éléments de noyau 332-336 sont analogues et possèdent chacun une portion ascendante 332a-336a, longitudinale, une portion descendante 332b-336b, longitudinale, longeant le tronçon supérieur de la portion ascendante 332a-336a, et une portion d'évacuation 332c-336c, transversale. La portion descendante 332b-336b de chaque élément de noyau 332-336 est d'autant plus longue qu'elle s'installe à distance du bord de fuite. Comme pour le premier élément de noyau 331, chaque portion d'évacuation 332c-336c possède deux segments d'extrémités 332d-336d destinés à former deux orifices de bord de fuite par cavité de ventilation du premier type. Ainsi, dans ce deuxième exemple, chaque cavité de ventilation du premier type couvre approximativement un sixième de la longueur du bord de fuite.

Le quatrième élément de noyau 337 possède pour sa part une unique portion ascendante 337a, longitudinale.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Aube pour turbomachine s'étendant longitudinalement entre un pied (11) et un sommet (18), comprenant une paroi intrados (16), une paroi extrados (17), un bord d'attaque (14) et un bord de fuite (15) et comprenant une pluralité de cavités de ventilation (21, 22, 23, 27), internes, formant un circuit de refroidissement (20) de l'aube (10),
dans laquelle plusieurs cavités de ventilation sont des cavités de ventilation d'un premier type (21, 22, 23) comprenant
- au moins une portion ascendante (21a, 22a, 23a), s'étendant longitudinalement entre le pied (11) et le sommet (18), en contact avec la paroi intrados (16) et à distance de la paroi extrados (17), et
- au moins une portion d'évacuation (21c, 22c, 23c), s'étendant vers et débouchant au niveau du bord de fuite (15) par au moins un orifice de bord de fuite (21d, 22d, 23d), et
dans laquelle au moins une cavité de ventilation du premier type (22, 23) comprend en outre au moins une portion descendante (22b, 23b), s'étendant longitudinalement depuis le sommet (18), en contact avec la paroi extrados (17) et à distance de la paroi intrados (16).

2. Aube selon la revendication 1, comprenant au moins trois, de préférence au moins cinq, cavités de ventilation du premier type (21, 22, 23).

3. Aube selon la revendication 1 ou 2, dans laquelle ladite portion d'évacuation (22c, 23c) s'étend depuis l'extrémité inférieure de ladite portion descendante (22b, 23b).

4. Aube selon l'une quelconque des revendications 1 à 3, dans laquelle ladite portion ascendante (22a, 23a) et ladite portion descendante (22b, 23b) sont séparées par une cloison (25).

5. Aube selon l'une quelconque des revendications 1 à 4, dans laquelle chaque cavité de ventilation du premier type (21, 22, 23) comprend entre 2 et 5 orifices de bord de fuite (21d, 22d, 23d).

6. Aube selon l'une quelconque des revendications 1 à 5, dans laquelle la paroi d'au moins une cavité de ventilation du premier type comporte un congé ou une surface inclinée à la frontière entre sa portion d'évacuation (21c, 22c, 23c) et sa portion descendante (22b, 23b).

7. Aube selon l'une quelconque des revendications 1 à 6, dans laquelle, la portion d'évacuation (222c) d'au moins une cavité de ventilation du premier type (222) possède, en coupe dans un plan perpendiculaire à la direction longitudinale de l'aube, un profil de forme générale courbée dépourvue d'arrête.

8. Aube selon l'une quelconque des revendications 1 à 7, dans laquelle au moins une cavité de ventilation du premier type est pourvue d'au moins un déflecteur à la frontière entre sa portion d'évacuation (21c, 22c, 23c) et sa portion descendante (22b, 23b).

9. Aube selon l'une quelconque des revendications 1 à 8, dans laquelle le circuit de refroidissement (20) comprend une première cavité de ventilation d'un deuxième type (27) ne débouchant pas au bord de fuite (15), cette première cavité de ventilation du deuxième type (27) s'étendant le long du bord d'attaque (14).

10. Roue aubagée pour module de turbomachine, comprenant au moins une aube selon l'une quelconque des revendications 1 à 9.

11. Turbine, comprenant au moins une roue aubagée selon la revendication 10.

12. Turbomachine, comprenant au moins une roue aubagée selon la revendication 10.

## Patentansprüche

1. Schaufel für eine Turbomaschine, die sich längs zwischen einem Fuß (11) und einer Spitze (18) erstreckt, eine druckseitige Wand (16), eine saugseitige Wand (17), eine Anströmkante (14) und eine Abströmkante (15) umfasst und eine Mehrzahl von inneren Belüftungshohlräumen (21, 22, 23, 27) umfasst, die einen Kühlkreislauf (20) der Schaufel (10) bilden,
wobei mehrere Belüftungshohlräume Belüftungshohlräume eines ersten Typs (21, 22, 23) sind, umfassend
- mindestens einen ansteigenden Abschnitt (21a, 22a, 23a), der sich längs zwischen dem Fuß (11) und der Spitze (18) erstreckt, in Kontakt mit der druckseitigen Wand (16) und beabstandet von der saugseitigen Wand (17), und
- mindestens einen Ableitungsabschnitt (21c, 22c, 23c), der sich zu der Abströmkante (15) hin erstreckt und daran über mindestens eine Abströmkantenöffnung (21d, 22d, 23d) mündet, und
wobei mindestens ein Belüftungshohlraum des ersten Typs (22, 23) ferner mindestens einen absteigenden Abschnitt (22b, 23b) umfasst, der sich längs von der Spitze (18) aus erstreckt, in Kontakt mit der saugseitigen Wand (17) und beabstandet von der druckseitigen Wand (16).

2. Schaufel nach Anspruch 1, umfassend mindestens drei, bevorzugt mindestens fünf, Belüftungshohlräume des ersten Typs (21, 22, 23).

3. Schaufel nach Anspruch 1 oder 2, wobei sich der Ableitungsabschnitt (22c, 23c) von dem unteren Ende des absteigenden Abschnitts (22b, 23b) aus erstreckt.

4. Schaufel nach einem der Ansprüche 1 bis 3, wobei der ansteigende Abschnitt (22a, 23a) und der absteigende Abschnitt (22b, 23b) durch eine Trennwand (25) getrennt sind.

5. Schaufel nach einem der Ansprüche 1 bis 4, wobei jeder Belüftungshohlraum des ersten Typs (21, 22, 23) zwischen 2 und 5 Abströmkantenöffnungen (21d, 22d, 23d) umfasst.

6. Schaufel nach einem der Ansprüche 1 bis 5, wobei die Wand mindestens eines Belüftungshohlraums des ersten Typs eine Ausrundung oder eine geneigte Fläche an der Grenze zwischen seinem Ableitungsabschnitt (21c, 22c, 23c) und seinem absteigenden Abschnitt (22b, 23b) beinhaltet.

7. Schaufel nach einem der Ansprüche 1 bis 6, wobei der Ableitungsabschnitt (222c) mindestens eines Belüftungshohlraums des ersten Typs (222) im Schnitt in einer senkrecht zur Längsrichtung der Schaufel verlaufenden Ebene ein kantenloses Profil mit gekrümmter Grundform aufweist.

8. Schaufel nach einem der Ansprüche 1 bis 7, wobei mindestens ein Belüftungshohlraum des ersten Typs mit mindestens einem Deflektor an der Grenze zwischen seinem Ableitungsabschnitt (21c, 22c, 23c) und seinem absteigenden Abschnitt (22b, 23b) versehen ist.

9. Schaufel nach einem der Ansprüche 1 bis 8, wobei der Kühlkreislauf (20) einen ersten Belüftungshohlraum eines zweiten Typs (27) umfasst, der nicht an der Abströmkante (15) mündet, wobei sich dieser Belüftungshohlraum des zweiten Typs (27) entlang der Anströmkante (14) erstreckt.

10. Beschaufeltes Rad für ein Turbomaschinenmodul, umfassend mindestens eine Schaufel nach einem der Ansprüche 1 bis 9.

11. Turbine, umfassend mindestens ein beschaufeltes Rad nach Anspruch 10.

12. Turbomaschine, umfassend mindestens ein beschaufeltes Rad nach Anspruch 10.

## Claims

1. A blade for a turbomachine extending longitudinally between a base (11) and an apex (18), comprising a lower surface wall (16), an upper surface wall (17), a leading edge (14) and a trailing edge (15) and comprising a plurality of internal ventilation cavities (21, 22, 23, 27) which form a cooling circuit (20) of the blade (10),
wherein several ventilation cavities are ventilation cavities of a first type (21, 22, 23) comprising
- at least one ascending portion (21a, 22a, 23a) which extends longitudinally between the base (11) and the apex (18), engaged with the lower surface wall (16) and spaced from the upper surface wall (17), and
- at least one discharge portion (21c, 22c, 23c) which extends towards and which opens at the trailing edge (15) via at least one port of the trailing edge (21d, 22d, 23d), and
wherein at least one ventilation cavity of the first type (22, 23) further comprises at least one descending portion (22b, 23b) which extends longitudinally from the apex (18) engaged with the upper surface wall (17) and spaced from the lower surface wall (16).

2. The blade according to claim 1, comprising at least three, preferably at least five, ventilation cavities of the first type (21, 22, 23).

3. The blade according to claim 1 or 2, wherein said discharge portion (22c, 23c) extends from the lower end of said descending portion (22b, 23b).

4. The blade according to any one of claims 1 to 3, wherein said ascending portion (22a, 23a) and said descending portion (22b, 23b) are separated by a partition (25).

5. The blade according to any one of claims 1 to 4, wherein each ventilation cavity of the first type (21, 22, 23) comprises between 2 and 5 ports of the trailing edge (21d, 22d, 23d).

6. The blade according to any one of claims 1 to 5, wherein the wall of at least one ventilation cavity of the first type includes a fillet or an inclined surface at the border between its discharge portion (21c, 22c, 23c) and its descending portion (22b, 23b).

7. The blade according to any one of claims 1 to 6, wherein the discharge portion (222c) of at least one ventilation cavity of the first type (222) has, in section in a plane perpendicular to the longitudinal direction of the blade, a generally curved profile devoid of ridge.

8. The blade according to any one of claims 1 to 7, wherein at least one ventilation cavity of the first type is provided with at least one deflector at the border between its discharge portion (21c, 22c, 23c) and its descending portion (22b, 23b).

9. The blade according to any one of claims 1 to 8, wherein the cooling circuit (20) comprises a first ventilation cavity of a second type (27) not opening at the trailing edge (15), this first ventilation cavity of the second type (27) extending along the leading edge (14).

10. A bladed wheel for a turbomachine module, comprising at least one blade according to any one of claims 1 to 9.

11. A turbine, comprising at least one bladed wheel according to claim 10.

12. A turbomachine, comprising at least one bladed wheel according to claim 10.
